# EUROPEAN PATENT SPECIFICATION

(11) **EP 2 116 731 B1**
(45) Date of publication and mention of the grant of the patent: **10.12.2014**
(21) Application number: 08711722.2
(22) Date of filing: 21.02.2008
(51) Int. Cl.: F16C 19/38, B60B 27/00, B60B 35/18, F16C 35/067

(54) **BEARING DEVICE FOR WHEEL**
Radlager
Roulement de roue

(30) Priority: 23.02.2007 JP 2007043758
(43) Date of publication of application: 11.11.2009
(73) Proprietor: NTN Corporation, Osaka-shi, Osaka 550-0003 (JP)
(72) Inventor: MAEDA, Kikuo, Kuwana-shi Mie 511-0811 (JP); OHTSUKI, Hisashi, Iwata-shi Shizuoka 438-8510 (JP)
(74) Representative: Bockhorni & Kollegen
(86) International application number: PCT/JP2008/052933
(87) International publication number: WO 2008/102836

(56) References cited:
- EP-A1- 1 731 777
- EP-A2- 1 486 353
- JP-A- 06 256 965
- JP-A- 2005 003 061
- JP-A- 2006 137 297
- JP-A- 2006 291 250
- JP-A- 2006 291 250
- US-A1- 2003 103 705

## Description

### TECHNICAL FIELD

The present invention relates to a bearing apparatus for wheel, and more particularly to a bearing apparatus for wheel for rotatably supporting the wheel with respect to a car body.

### BACKGROUND ART

Further improvement in fuel efficiency or running stability of a vehicle such as an automobile has been required in recent years. To that end, a bearing apparatus for wheel rotatably supporting the wheel with respect to a car body has been reduced in size and weight. Consequently, parts constituting the bearing apparatus for wheel tend to be made smaller in size and thickness. Meanwhile, with higher power and performance of the vehicle such as an automobile, it is likely that greater load is imposed on the bearing apparatus for wheel. Under such circumstances, further reduction in size or thickness of parts or improvement in durability of the bearing apparatus for wheel has become difficult.

In order to address such difficulty, it has been proposed to form, in the parts constituting the bearing apparatus for wheel, a hardened portion by subjecting a region insufficient in strength to partial hardening treatment by utilizing induction hardening, to thereby ensure strength, in particular, rotating bending fatigue strength or the like, of that region (Japanese Patent Laying-Open No. 2002-87008 (Patent Document 1)). Patent Document 1: Japanese Patent Laying-Open No. 2002-87008

Further prior art is known from JP 2006 291 250 A, US 2003/103705 A1 and EP 1 486 353 A2

### DISCLOSURE OF THE INVENTION

### PROBLEMS TO BE SOLVED BY THE INVENTION

Forming of a hardened portion in a region insufficient in strength, however, may give rise to a problem of strength of a non-hardened portion, which is a portion other than the hardened portion, and it is necessary to additionally form hardened portions. Thus, forming of a large number of hardened portions leads to complicated manufacturing step, in particular, heat treatment step, of the bearing apparatus for wheel, and manufacturing cost is increased. In addition, if a thin portion having a small thickness or a region adjacent to the thin portion is subjected to hardening treatment such as induction hardening, another problem of deformation of the thin portion due to heat treatment may arise. Meanwhile, it may be effective to harden the part, of which strength is required, in its entirety, among the parts constituting the bearing apparatus for wheel, to thereby eliminate a non-hardened portion and ensure strength. If the part is formed as the hardened portion in its entirety, however, subsequent working becomes difficult, and it is not necessarily effective to adopt such measures.

From the foregoing, an object of the present invention is to provide a bearing apparatus for wheel with ensured high durability by including a part with improved fatigue strength in a non-hardened portion.

### MEANS FOR SOLVING THE PROBLEMS

A bearing apparatus for wheel according to the present invention includes: an outer member having multiple rows of annular outer raceway surfaces formed on an inner circumferential surface; an inner member having multiple rows of annular inner raceway surfaces opposing the outer raceway surfaces formed; and a rolling element in contact with the outer raceway surface and the inner raceway surface and arranged on an annular raceway in a freely rolling manner. Any one of the outer member and the inner member includes a flanged member for wheel, that is made of steel and has a wheel attachment flange formed, the wheel attachment flange being a flange for attaching a wheel. In addition, the flanged member for wheel has a hardened portion hardened to attain 50 HRC or higher as a result of quench hardening, and a non-hardened portion representing a portion other than the hardened portion. Here, steel forming the non-hardened portion has a ratio of area occupied by ferrite of not higher than 3%. Said steel forming said non-hardened portion has austenite grain size of No. 8 or higher. Furthermore, said flanged member for wheel has an insertion hole for insertion of another member formed in a region including a central axis of said raceway of said rolling element and the side wall of the insertion hole is included in the non-hardened portion where compressive stress in a range from at least 50 MPa to at most 500 MPa remains in the surface.

In general, in the flanged member for wheel constituting the bearing apparatus for wheel, a measure to form the hardened portion in a portion insufficient in strength is adopted. Such a measure, however, may give rise to a problem of the strength of the non-hardened portion which is a portion other than the hardened portion, and it is necessary to additionally form hardened portions. Considering the problems of manufacturing cost, deformation due to heat treatment, workability, and the like as described above, however, a measure to form a large number of hardened portions or a measure to form the flanged member for wheel as the hardened portion in its entirety is not necessarily effective.

In contrast, according to the bearing apparatus for wheel in the present invention, steel forming the non-hardened portion of the flanged member for wheel has a ratio of area occupied by ferrite of not higher than 3%. Accordingly, presence of ferrite that is low in strength and tends to be an origin of crack attributed to repeatedly applied stress or a propagation path of the crack is suppressed and fatigue strength of the non-hardened portion is improved. Consequently, high durability of the bearing apparatus for wheel in the present invention is ensured by including the flanged member for wheel with improved fatigue strength in the non-hardened portion.

In the bearing apparatus for wheel above, the flanged member for wheel has an insertion hole for insertion of another member formed in a region including a central axis of the raceway of the rolling element.

In the flanged member for wheel above, an insertion hole for coupling the bearing apparatus for wheel to another member by insertion of such another member as a shaft may be formed. Here, relatively large stress may repeatedly be applied to the surface of the sidewall of the insertion hole. Accordingly, depending on magnitude of the stress, crack may be generated in the surface of the sidewall of the insertion hole and may propagate, which results in failure of the flanged member for wheel. In contrast, a region extending from the surface of the sidewall of the insertion hole by 1mm or smaller is formed as the non-hardened portion where the ratio of area occupied by ferrite is not higher than 3% as described above, so that the fatigue strength around the surface of the sidewall of the insertion hole is improved and failure can be suppressed.

In the bearing apparatus for wheel above, preferably, a root portion of the wheel attachment flange on a side where the wheel is attached when viewed from the wheel attachment flange has a surface hardness of 35 HRC or lower.

Thus, workability in cutting or the like is improved and deformation due to heat treatment can be suppressed, and lowering in surface runout accuracy of a brake rotor attachment surface of the wheel attachment flange caused by deformation due to heat treatment can be prevented.

In the bearing apparatus for wheel above, preferably, the inner member includes a hub ring serving as the flanged member for wheel, and an inner ring fitted into the hub ring. Thus, the inner ring having the inner raceway surface formed and having excellent durability, in particular, rolling contact fatigue life, can be adopted. Consequently, durability of the bearing apparatus for wheel can further be improved.

In the bearing apparatus for wheel above, preferably, an inboard-side end portion representing an end portion of the hub ring opposite to where the wheel is attached when viewed from the wheel attachment flange forms a caulking portion as a result of its plastic deformation in a radially outward direction. The inner ring is fixed to the hub ring in a direction of axis by the caulking portion.

Thus, what is called a self-retaining structure is achieved. Therefore, as it is not necessary to control a pre-load amount by firm fastening by means of a nut or the like as in the conventional example, incorporation in the vehicle can be simplified and the pre-load amount can be maintained for a long time.

In the bearing apparatus for wheel above, preferably, the caulking portion is formed as a result of plastic deformation of the inboard-side end portion having a surface hardness of 25 HRC or lower.

Thus, variation in hardness of the caulking portion is suppressed. In addition, as sufficient workability can be ensured, generation of small crack in the surface of the caulking portion due to plastic working can be suppressed and reliability of the bearing apparatus for wheel is improved.

In the bearing apparatus for wheel above, preferably, a root portion of the wheel attachment flange opposite to where the wheel is attached when viewed from the wheel attachment flange has a surface hardness not lower than 54 HRC and not higher than 64 HRC.

Thus, sufficient mechanical strength against rotating bending load applied to the wheel attachment flange can be provided, and strength and durability of the flanged member for wheel are further improved.

In the bearing apparatus for wheel above, preferably, the steel forming the flanged member for wheel is a medium-carbon steel containing carbon not less than 0.40 mass % and not more than 0.80 mass %. Thus, ease in forging, ease in cutting, ease in heat treatment, or cost efficiency is improved, and the flanged member for wheel is particularly suitable for partial quench hardening using induction hardening.

### EFFECTS OF THE INVENTION

As can clearly be understood from the description above, according to the bearing apparatus for wheel of the present invention, the bearing apparatus for wheel with ensured high durability by including parts with improved fatigue strength in the non-hardened portion can be provided.

### BRIEF DESCRIPTION OF THE DRAWINGS

Fig. 1 is a schematic cross-sectional view showing a structure of a bearing apparatus for wheel in one embodiment of the present invention.
Fig. 2 is a flowchart showing an overall method of manufacturing a bearing apparatus for wheel in one embodiment of the present invention.
Fig. 3 is a flowchart showing an overall step of manufacturing a hub ring, in the method of manufacturing a bearing apparatus for wheel in one embodiment of the present invention.
Fig. 4 illustrates an exemplary heating pattern (temperature history provided to a steel member) in a thermal refining step in one embodiment of the present invention.

### DESCRIPTION OF THE REFERENCE SIGNS

1 bearing apparatus for wheel; 10 outer ring; 10A outer raceway surface; 11 inner circumferential surface; 12A first outer raceway surface; 13A second outer raceway surface; 15 outer ring flange; 15A outer ring penetration hole; 19 hardened portion; 20 inner member; 30 hub ring; 31 wheel attachment flange; 31A hub ring bolt hole; 31B, 31D root portion; 31C brake rotor attachment surface; 33 non-hardened portion; 34 small diameter portion; 34A caulking portion; 37 serration portion; 38 insertion hole; 39 hardened portion; 40 inner ring; 40A inner raceway surface; 41 first inner ring; 41 A first inner raceway surface; 42 second inner ring; 42A second inner raceway surface; 50 roller; 60A, 60B cage; 70 sealing member; and 71 bolt.

### BEST MODES FOR CARRYING OUT THE INVENTION

An embodiment of the present invention will be described hereinafter with reference to the drawings. In the drawings below, the same or corresponding elements have the same reference characters allotted, and description thereof will not be repeated.

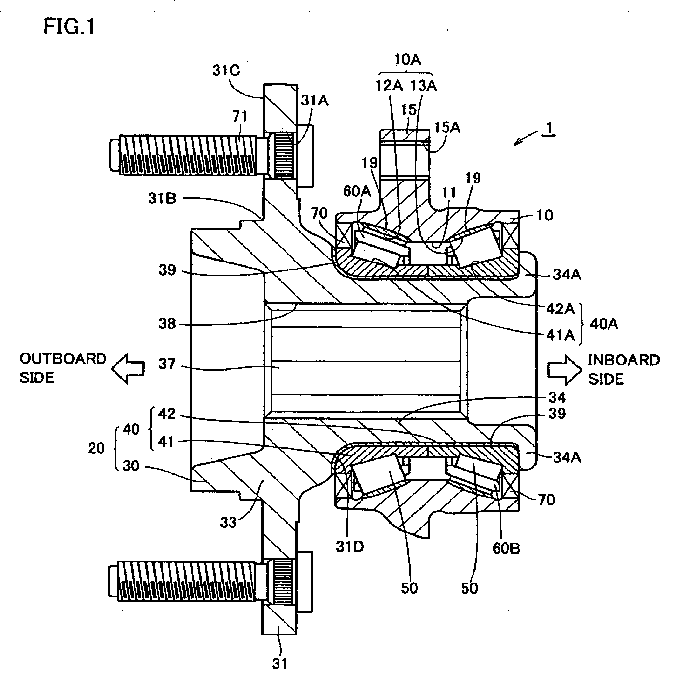

Initially, a bearing apparatus for wheel in the present embodiment will be described with reference to Fig. 1.

Referring to Fig. 1, a bearing apparatus for wheel 1 in the present embodiment includes an outer ring 10, a hub ring 30 and an inner ring 40 serving as raceway members, and a plurality of rollers 50 serving as rolling elements. Outer ring 10 implements an outer member, while hub ring 30 and inner ring 40 implement an inner member 20.

Outer ring 10 serving as the outer member is an annular raceway member having annular outer raceway surfaces 10A formed in two rows on an inner circumferential surface 11. Outer raceway surface 10A includes a first outer raceway surface 12A and a second outer raceway surface 13A. Outer ring 10 is made, for example, of S53C under JIS, which is steel. In outer ring 10, a region including first outer raceway surface 12A and a region including second outer raceway surface 13A are quench hardened, for example, using induction hardening, so as to form a hardened portion 19 having hardness of 58 HRC or higher.

Meanwhile, hub ring 30 serving as the inner member is a raceway member arranged in a manner partially surrounded by outer ring 10. Inner ring 40 serving as the inner member includes an annular first inner ring 41 fitted outside a small diameter portion 34 smaller in an outer diameter than a wheel attachment flange 31 in hub ring 30 and an annular second inner ring 42 arranged next to first inner ring 41 around the identical central axis and fitted outside small diameter portion 34. Small diameter portion 34 of hub ring 30 has a cylindrical shape. An inboard-side end portion which is the end portion opposite to where flange 31 is formed when viewed from first inner ring 41 and second inner ring 42 undergoes plastic deformation in a radially outward direction, to form a caulking portion 34A. Caulking portion 34A fixes first inner ring 41 and second inner ring 42 to hub ring 30 in a direction of axis. Here, the inboard-side end portion refers to a region that should plastically deform as a result of caulking for forming caulking portion 34A.

First inner ring 41 and second inner ring 42 are formed, for example, of SUJ2 under JIS, which is steel, and they are quench hardened in their entirety to attain a hardness not lower than 58 HRC. In addition, a first inner raceway surface 41A and a second inner raceway surface 42A each implementing an inner raceway surface 40A are formed on an outer circumferential surface of first inner ring 41 and second inner ring 42. First inner raceway surface 41A and second inner raceway surface 42A are opposed to first outer raceway surface 12A and second outer raceway surface 13A respectively.

Meanwhile, hub ring 30 is formed, for example, of S53C under JIS, which is steel. In hub ring 30, a region including the surface of small diameter portion 34 in contact with inner ring 40 is quench hardened through induction hardening or the like, to form a hardened portion 39 having a hardness not lower than 58 HRC.

In addition, in hub ring 30 serving as the flanged member for wheel, an insertion hole 38 for insertion of another member such as a shaft is formed in a region including a central axis of a raceway of roller 50, in a manner penetrating the hub ring in the direction of axis. A plurality of grooves extending in the direction of axis are formed on the surface of the sidewall of insertion hole 38 (inner circumferential surface of hub ring 30). Consequently, the sidewall of insertion hole 38 implements a serration portion 37.

A plurality of rollers 50 are arranged in a freely rolling manner on annular raceways in multiple rows (two rows), i.e., a row where rollers 50 are in contact with first outer raceway surface 12A of outer ring 10 and first inner raceway surface 41A of first inner ring 41 and arranged at a prescribed pitch in a circumferential direction by means of an annular cage 60A, and a row where rollers 50 are in contact with second outer raceway surface 13A of outer ring 10 and second inner raceway surface 42A of second inner ring 42 and arranged at a prescribed pitch in a circumferential direction by means of an annular cage 60B.

In addition, a sealing member 70 is arranged between opposing end portions in the axial direction of outer ring 10 and end portions of first inner ring 41 and second inner ring 42 opposed thereto. Thus, leakage of lubricating grease sealed in a space between outer ring 10 and first and second inner rings 41 and 42 as well as introduction of dust or the like from the outside into the space are prevented.

According to the structure above, outer ring 10, and hub ring 30 and inner ring 40 can rotate relative to each other.

Moreover, a hub ring bolt hole 31 A is formed in wheel attachment flange 31 of hub ring 30. A bolt 71 inserted in hub ring bolt hole 31 A fixes wheel attachment flange 31 and a wheel (not shown) to each other. On the other hand, outer ring 10 has an outer ring flange 15 where an outer ring penetration hole 15A is formed. A not-shown bolt inserted in outer ring penetration hole 15A fixes outer ring flange 15 and a suspension (not shown) fixed to the car body to each other. According to the structure above, bearing apparatus for wheel 1, interposed between the wheel and the car body, rotatably supports the wheel to the car body.

Namely, bearing apparatus for wheel 1 in the present embodiment includes outer ring 10 serving as the outer member having annular outer raceway surfaces 10A formed in multiple rows on inner circumferential surface 11, inner member 20 having annular inner raceway surfaces 40A opposing outer raceway surfaces 10A formed in multiple rows, and roller 50 serving as the rolling element in contact with outer raceway surface 10A and inner raceway surface 40A and arranged on the annular raceway in a freely rolling manner.

Inner member 20 includes hub ring 30 serving as the flanged member for wheel, that is made of steel and has wheel attachment flange 31 formed, wheel attachment flange 31 being a flange for attaching a wheel (not shown). Hub ring 30 has hardened portion 39 hardened to attain 50 HRC or higher as a result of quench hardening and a non-hardened portion 33 which is the portion other than hardened portion 39. The steel forming non-hardened portion 33 has austenite grain size of No. 8 or higher.

According to bearing apparatus for wheel 1 in the present embodiment, the steel forming non-hardened portion 33 of hub ring 30 serving as the flanged member for wheel has austenite grain size of No. 8 or higher, so that the microstructure of the steel is made finer and the fatigue strength of non-hardened portion 33 is improved. Consequently, high durability of bearing apparatus for wheel 1 in the present embodiment is ensured by including the flanged member with improved fatigue strength in non-hardened portion 33. In order to ensure further higher durability, the steel forming non-hardened portion 33 preferably has austenite grain size of No. 10 or higher.

Here, the austenite grain size of the steel refers to the grain size number determined by a test method defined under JIS G0551, and refers to what is called a grain size number of prior austenite.

If the grain size number is lower than No. 8, the fatigue strength is not necessarily sufficient, considering the stress generally imposed on the flanged member for wheel. Therefore, the grain size number is preferably not lower than No. 8. On the other hand, if the grain size number is greater than No. 12, hardenability may lower. Therefore, the grain size number is preferably not greater than No. 12.

The condition of the austenite grain size of the steel of not lower than No. 8 can be determined as satisfied, for example, if the grain size is not lower than No. 8 at all of three locations in the non-hardened portion tested in accordance with the method defined under JIS G0551.

Bearing apparatus for wheel 1 in the present embodiment includes outer ring 10 having annular outer raceway surfaces 10A formed in multiple rows on inner circumferential surface 11, inner member 20 having annular inner raceway surfaces 40A opposing outer raceway surfaces 10A formed in multiple rows, and roller 50 serving as the rolling element in contact with outer raceway surface 10A and inner raceway surface 40A and arranged on the annular raceway in a freely rolling manner.

Inner member 20 includes hub ring 30 serving as the flanged member for wheel, that is made of steel and has wheel attachment flange 31 formed, wheel attachment flange 31 being a flange for attaching a wheel (not shown). Hub ring 30 has hardened portion 39 hardened to attain 50 HRC or higher as a result of quench hardening and non-hardened portion 33 which is the portion other than hardened portion 39. The steel forming non-hardened portion 33 has a ratio of area occupied by ferrite of not higher than 3%.

According to bearing apparatus for wheel 1 in the present embodiment, the steel forming non-hardened portion 33 of hub ring 30 serving as the flanged member for wheel has a ratio of area occupied by ferrite of not higher than 3%. Accordingly, presence of ferrite that is low in strength and tends to be an origin of crack attributed to repeatedly applied stress or a propagation path of the crack is suppressed and fatigue strength of non-hardened portion 33 is improved. Consequently, high durability of bearing apparatus for wheel 1 in the present embodiment is ensured by including the flanged member with improved fatigue strength in non-hardened portion 33.

Here, if the ratio of area occupied by ferrite exceeds 3%, ferrite phase is coupled to adjacent another ferrite phase, and it is more likely that ferrite becomes an origin of crack or a propagation path thereof. Therefore, the ratio of area occupied by ferrite is preferably not higher than 3%.

The ratio of area occupied by ferrite refers to a ratio of area of ferrite in a cut surface of the non-hardened portion of the flanged member for wheel constituting the bearing apparatus for wheel, with respect to the entire cut surface. More specifically, the ratio of area occupied by ferrite can be measured as follows. Initially, a test sample is cut from the non-hardened portion of the flanged member for wheel. After the surface of the test sample is polished, the surface is corroded with an etchant such as picral (picric acid alcohol solution). Thereafter, the corroded surface is observed, for example, with an optical microscope in three fields of view of 1mm×1mm (=1mm²), to calculate the average of the ratio of area occupied by ferrite with respect to the total area.

In addition, the ratio of area occupied by ferrite that may be an origin of crack or a propagation path of the crack is preferably small and desirably 0. Namely, no ferrite is desirably observed in observation of three fields of view in the measurement method above.

Bearing apparatus for wheel 1 in the present embodiment includes outer ring 10 having annular outer raceway surfaces 10A formed in multiple rows on inner circumferential surface 11, inner member 20 having annular inner raceway surfaces 40A opposing outer raceway surfaces 10A formed in multiple rows, and roller 50 serving as the rolling element in contact with outer raceway surface 10A and inner raceway surface 40A and arranged on the annular raceway in a freely rolling manner.

Inner member 20 includes hub ring 30 serving as the flanged member for wheel, that is made of steel and has wheel attachment flange 31 formed, wheel attachment flange 31 being a flange for attaching a wheel (not shown). Hub ring 30 has hardened portion 39 hardened to attain 50 HRC or higher as a result of quench hardening and non-hardened portion 33 which is the portion other than hardened portion 39. The steel forming non-hardened portion 33 has a ratio of area occupied by carbide of not higher than 10%.

According to bearing apparatus for wheel 1 in the present embodiment, the steel forming non-hardened portion 33 of hub ring 30 serving as the flanged member for wheel has a ratio of area occupied by carbide of not higher than 10%. Accordingly, the structure of the steel forming non-hardened portion 33 is homogenous and fatigue strength of non-hardened portion 33 is improved. Consequently, high durability of bearing apparatus for wheel 1 in the present embodiment is ensured by including the flanged member with improved fatigue strength in non-hardened portion 33.

Here, if the ratio of area occupied by carbide exceeds 10%, tendency of lowering in fatigue strength due to lower homogeneity of the steel forming non-hardened portion 33 is more significant. Therefore, the ratio of area occupied by carbide is preferably not higher than 10%.

The ratio of area occupied by carbide refers to a ratio of area of carbide (cementite; Fe₃C) having a size large enough to make the steel structure inhomogeneous to such an extent as lowering fatigue strength and allowing observation with a general optical microscope, more specifically, having a diameter or a width greater than 1µm, among carbides in the cut surface of the non-hardened portion of the flanged member for wheel constituting the bearing apparatus for wheel, with respect to the entire cut surface. For example, the ratio of area occupied by carbide can be measured as follows. Initially, a test sample is cut from the non-hardened portion of the flanged member for wheel. After the surface of the test sample is polished, the surface is corroded with an etchant such as picral. Thereafter, the corroded surface is observed, for example, with an optical microscope in three fields of view of 1mm×1mm (=1mm²), to calculate the average of the ratio of area occupied by carbide with respect to the total area.

In addition, the ratio of area occupied by carbide lowering fatigue strength is preferably small and desirably 0. Namely, no carbide is desirably observed in observation of three fields of view in the measurement method above.

Bearing apparatus for wheel 1 in the present embodiment includes outer ring 10 having annular outer raceway surfaces 10A formed in multiple rows on inner circumferential surface 11, inner member 20 having annular inner raceway surfaces 40A opposing outer raceway surfaces 10A formed in multiple rows, and roller 50 serving as the rolling element in contact with outer raceway surface 10A and inner raceway surface 40A and arranged on the annular raceway in a freely rolling manner.

Inner member 20 includes hub ring 30 serving as the flanged member for wheel, that is made of steel and has wheel attachment flange 31 formed, wheel attachment flange 31 being a flange for attaching a wheel (not shown). Hub ring 30 has hardened portion 39 hardened to attain 50 HRC or higher as a result of quench hardening and non-hardened portion 33 which is the portion other than hardened portion 39. The content of non-diffusible hydrogen in the steel forming non-hardened portion 33 is not higher than 0.8ppm.

According to bearing apparatus for wheel 1 in the present embodiment, the content of non-diffusible hydrogen in the steel forming non-hardened portion 33 of hub ring 30 serving as the flanged member for wheel is suppressed to 0.8ppm or lower. Accordingly, presence of hydrogen that may promote generation and propagation of crack is suppressed and the fatigue strength of non-hardened portion 33 is improved. Consequently, high durability of bearing apparatus for wheel 1 in the present embodiment is ensured by including the flanged member with improved fatigue strength in non-hardened portion 33.

Here, if the content of non-diffusible hydrogen exceeds 0.8ppm, it is more likely that generation and propagation of crack tends to be promoted. Therefore, the content of non-diffusible hydrogen is preferably not higher than 0.8ppm.

The content of non-diffusible hydrogen in the steel forming non-hardened portion 33 can be determined, for example, as follows. Specifically, the content of hydrogen can be determined, for example, with a DH-103 hydrogen analyzer manufactured by LECO. Specifications of the DH-103 hydrogen analyzer manufactured by LECO are as shown below:
Range of analysis: 0.01 to 50.00ppm
Accuracy in analysis: ±0.1ppm or ±3%H (any higher one)
Sensitivity in analysis: 0.01ppm
Detection method: Heat conductivity method
Sample mass size: 10mg to 35g (maximum: diameter 12mm×length 100mm)
Heating furnace temperature range: 50°C to 1100°C
Reagent: Anhydron Mg(ClO₄)₂, Ascarite NaOH
Carrier gas: Nitrogen gas, Gas dosing gas: Hydrogen gas; both gases having purity of 99.99% or higher and pressure of 40PSI (2.8kgf/cm²)

Overall measurement procedure is as follows. The sample taken with a dedicated sampler is inserted in the hydrogen analyzer, in a state contained in the sampler. Diffusible hydrogen inside is guided to a heat conductivity detector by means of nitrogen carrier gas. In the present embodiment, diffusible hydrogen is not measured. Thereafter, the sample is taken out of the sampler and heated in a resistance heating furnace, so as to guide non-diffusible hydrogen by means of the nitrogen carrier gas to the heat conductivity detector. By measuring heat conductivity with the heat conductivity detector, the content of non-diffusible hydrogen can be found.

In order to further improve fatigue strength, the content of non-diffusible hydrogen is preferably not higher than 0.5ppm.

The region of hub ring 30 in the present embodiment that extends from the surface of serration portion 37 by 1mm or smaller is preferably formed as non-hardened portion 33 satisfying at least one of the condition of austenite grain size, the condition of the ratio of area occupied by ferrite, the condition of the ratio of area occupied by carbide, and the condition of the content of non-diffusible hydrogen described above.

Thus, the fatigue strength around the surface of the sidewall of insertion hole 38, that is, serration portion 37, is improved, and failure from serration portion 37 can be suppressed.

Considering general magnitude of the stress applied from another member to the flanged member for wheel and stress distribution in the flanged member for wheel, a region with high fatigue strength that extends by 1 mm from the surface of the sidewall of the insertion hole will suffice. Therefore, preferably, the region extending from the surface by 1mm or smaller satisfies the condition above.

Bearing apparatus for wheel 1 in the present embodiment includes outer ring 10 having annular outer raceway surfaces 10A formed in multiple rows on inner circumferential surface 11, inner member 20 having annular inner raceway surfaces 40A opposing outer raceway surfaces 10A formed in multiple rows, and roller 50 serving as the rolling element in contact with outer raceway surface 10A and inner raceway surface 40A and arranged on the annular raceway in a freely rolling manner.

Inner member 20 includes hub ring 30 serving as the flanged member for wheel, that is made of steel and has wheel attachment flange 31 formed, wheel attachment flange 31 being a flange for attaching a wheel (not shown). Hub ring 30 has hardened portion 39 hardened to attain 50 HRC or higher as a result of quench hardening and non-hardened portion 33 which is the portion other than hardened portion 39. Compressive stress not lower than 50MPa and not higher than 500MPa remains in the surface of non-hardened portion 33.

According to bearing apparatus for wheel 1 in the present embodiment, compressive stress not lower than 50MPa and not higher than 500MPa remains in the surface of non-hardened portion 33 of hub ring 30 serving as the flanged member for wheel. Accordingly, generation of crack in the surface of non-hardened portion 33 and subsequent propagation thereof is suppressed and the fatigue strength of non-hardened portion 33 is improved. Therefore, even if moment load is repeatedly applied to the flange for wheel from a tire, generation of crack from non-hardened portion 33 is suppressed and occurrence of fretting damage is suppressed. Consequently, high durability of bearing apparatus for wheel 1 in the present embodiment is ensured by including the flanged member with improved fatigue strength in non-hardened portion 33.

Here, if the compressive stress that remains in the surface is smaller than 50MPa, an effect of improvement in fatigue strength and an effect of suppression of occurrence of fretting damage are not great, and hence compressive stress not smaller than 50MPa is necessary. In order to further improve fatigue strength and further suppress occurrence of fretting damage, compressive stress that remains in the surface is preferably not smaller than 100MPa. On the other hand, if compressive stress that remains in the surface exceeds 500MPa, other outcomes brought about by providing compressive stress, such as work-hardening, become significant, and crack is likely. Therefore, compressive stress is preferably not greater than 500MPa.

It is noted that compressive stress can be determined by measuring, with an X-ray stress measurement apparatus, compressive stress in a region below the surface of non-hardened portion 33 by 50µm, in a direction in which stress applied in non-hardened portion 33 is greatest, for example, in the direction of axis.

Serration portion 37 of hub ring 30 in the present embodiment is preferably formed as non-hardened portion 33 that satisfies the condition of stress described above. Namely, the sidewall of insertion hole 38 is preferably included in non-hardened portion 33 that satisfies the condition of stress described above. Thus, fatigue strength around the surface of the sidewall of insertion hole 38 is improved and failure from serration portion 37 can be suppressed.

In addition, in hub ring 30 in the present embodiment, a root portion 31 B of wheel attachment flange 31 on a side where the wheel is attached (outboard side) when viewed from wheel attachment flange 31 has a surface hardness not higher than 35 HRC. Thus, workability in cutting or the like is improved and deformation due to heat treatment can be suppressed, and lowering in surface runout accuracy of a brake rotor attachment surface 31C of wheel attachment flange 31 caused by deformation due to heat treatment is suppressed.

In hub ring 30 in the present embodiment, an inboard-side end portion which is an end portion of hub ring 30 opposite (inboard side) to where the wheel is attached (outboard side) when viewed from wheel attachment flange 31 forms caulking portion 34A as a result of its plastic deformation in a radially outward direction. Inner ring 40 is fixed to hub ring 30 in a direction of axis by caulking portion 34A.

Thus, what is called a self-retaining structure is achieved. Therefore, as it is not necessary to control a pre-load amount by firm fastening by means of a nut or the like as in the conventional example, incorporation in the vehicle can be simplified and the pre-load amount can be maintained for a long time.

In hub ring 30 in the present embodiment, caulking portion 34A is formed as a result of plastic deformation of the inboard-side end portion having a surface hardness not higher than 25 HRC. Thus, variation in hardness of caulking portion 34A is suppressed. In addition, as sufficient workability can be ensured, generation of small crack in the surface of caulking portion 34A due to plastic working can be suppressed and reliability of bearing apparatus for wheel 1 is improved.

In hub ring 30 in the present embodiment, a root portion 31D of wheel attachment flange 31 opposite (inboard side) to where the wheel is attached (outboard side) when viewed from wheel attachment flange 31 has R formed and has a surface hardness not lower than 54 HRC and not higher than 64 HRC.

Thus, sufficient mechanical strength against the rotating bending load applied to wheel attachment flange 31 can be provided, and strength and durability of hub ring 30 are further improved.

Here, the root portion of wheel attachment flange 31 refers to a base portion where wheel attachment flange 31 projects, in a cross-section including the central axis of the raceway of roller 50 serving as the rolling element, in a direction intersecting the central axis, and refers to a region where the surface of the flange is normally curved, a region where what is called R is formed, or a region where a beveled portion is formed.

In addition, the steel forming hub ring 30 in the present embodiment is a medium-carbon steel containing carbon not less than 0.40 mass % and not more than 0.80 mass %. Thus, ease in forging, ease in cutting, ease in heat treatment, or cost efficiency is improved, and hub ring 30 is particularly suitable for partial quench hardening using induction hardening.

A method of manufacturing bearing apparatus for wheel 1 in the present embodiment will now be described.

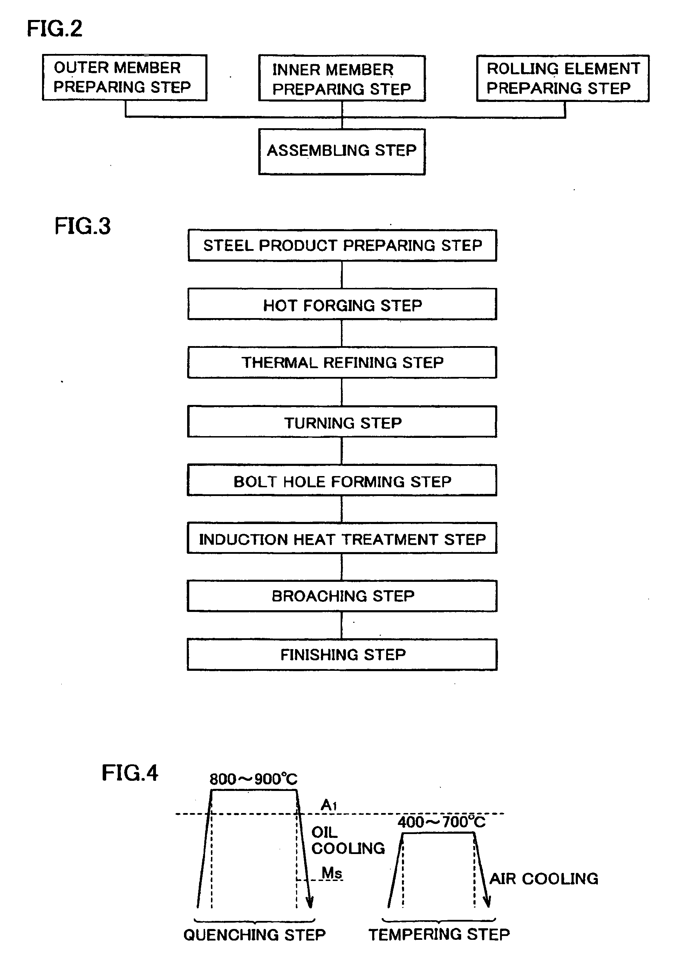

Referring to Fig. 2, the method of manufacturing bearing apparatus for wheel 1 in the present embodiment includes an outer member preparing step, an inner member preparing step, a rolling element preparing step, and an assembling step. In the outer member preparing step, referring to Fig. 1, outer ring 10 having annular outer raceway surfaces 10A formed in multiple rows on inner circumferential surface 11 is prepared. In the inner member preparing step, hub ring 30 and inner ring 40 constituting inner member 20 having annular inner raceway surfaces 40A formed in multiple rows are prepared. In the rolling element preparing step, roller 50 serving as the rolling element is prepared.

In the assembling step, initially, outer ring 10, inner ring 40 and roller 50 are combined such that inner raceway surface 40A is opposed to outer raceway surface 10A, and roller 50 is arranged on the annular raceway in a manner in contact with outer raceway surface 10A and inner raceway surface 40A. Then, a space lying between outer ring 10 and inner ring 40 (bearing space) is filled with a lubricant such as lubricating grease, and thereafter sealing member 70 is press-fitted between the opposing end portions of inner circumferential surface 11 of outer ring 10 and the end portions of first inner ring 41 and second inner ring 42 opposed to the opposing end portions, so that the lubricant is sealed in the bearing space. Thereafter, inner ring 40 of the assembly assembled as described above is press-fitted into hub ring 30 manufactured in a hub ring manufacturing step (Fig. 3) which will be described later. Thereafter, the inboard-side end portion which is the end portion of hub ring 30 plastically deforms in a radially outward direction so as to form caulking portion 34A, and caulking portion 34A fixes inner ring 40 to hub ring 30 in the direction of axis. Thus, assembly of bearing apparatus for wheel 1 is completed.

Any one of the outer member preparing step and the inner member preparing step includes a flanged-member-for-wheel manufacturing step of manufacturing the flanged member for wheel, that is made of steel and has the wheel attachment flange formed, the flanged member for wheel being a flange for attaching the wheel. More specifically, in the present embodiment, the inner member preparing step includes a hub ring manufacturing step as the inner member preparing step in which hub ring 30 serving as the flanged member for wheel is manufactured.

Referring to Fig. 3, the hub ring manufacturing step as the flanged-member-for-wheel manufacturing step includes a steel product preparing step, a hot forging step as a hot working step, a thermal refining step, a turning step, a bolt hole forming step, an induction heat treatment step as a partial quench hardening step, a broaching step, and a finishing step. In the steel product preparing step, a steel product made of steel that should form hub ring 30 serving as the flanged member for wheel, such as a steel product made of medium-carbon steel containing carbon not less than 0.40 mass % and not more than 0.80 mass %, is prepared. In the hot forging step, the steel product is heated, for example, to a temperature range not lower than 1050°C and not higher than 1300°C for hot forging, so that a steel member having an overall shape of hub ring 30 shown in Fig. 1 is formed. In the thermal refining step, the steel member is thermally refined. In the turning step, a surface region including the surface of wheel attachment flange 31 and small diameter portion 34 implemented by the steel member is subjected to turning. In the bolt hole forming step, drilling or the like is performed with respect to wheel attachment flange 31, thereby forming hub ring bolt hole 31A.

In the induction heat treatment step, a part of the thermally refined steel member is quench hardened. Specifically, referring to Fig. 1, the region including the surface of small diameter portion 34 in contact with inner ring 40, which is the region other than the surface of the sidewall of insertion hole 38, is quench hardened through induction hardening, so that hardened portion 39 having a hardness not lower than 58 HRC is formed and root portion 31D of wheel attachment flange 31 on the inboard side has a surface hardness not lower than 54 HRC and not higher than 64 HRC. In order to satisfy such a condition for hardness, for example in the induction heat treatment step, after the induction hardening step in which induction hardening is performed, an entire tempering step in which entire hub ring 30 is tempered and/or a partial tempering step in which a part of the region subjected to induction hardening is tempered through heating using induction heating may be performed.

In the broaching step, referring to Fig. 1, a plurality of grooves extending in the direction of axis are formed in the surface of the sidewall of insertion hole 38 that has been formed in the hot working step, thereby forming serration portion 37. Thereafter, in the finishing step, finishing treatment (finishing) such as grinding of the steel member is performed, thus completing hub ring 30 serving as the flanged member for wheel.

Details of the thermal refining step will now be described. In Fig. 4, the horizontal direction toward the right represents lapse of time and the upward direction represents increase in temperature.

Referring to Fig. 4, the thermal refining step has a quenching step and a tempering step. In the quenching step, the steel member, fabricated in the hot forging step, is heated to a temperature not lower than A₁ point, for example, a temperature not lower than 800°C and not higher than 900°C, and held for at least one hour to at most three hours. Thereafter, the steel member is cooled from a temperature range not lower than A₁ point to a temperature not higher than M_{S} point, and the steel member is thus quench hardened. Cooling can be performed, for example, by immersing the steel member in the temperature range not lower than A₁ point in oil for quenching (oil cooling).

Thereafter, in the tempering step, the steel member that has been quench hardened is heated to a temperature lower than A₁ point, for example, a temperature not lower than 400°C and not higher than 700°C, and held for at least one hour to at most three hours. Thereafter, the steel member is cooled to a room temperature and thus tempered. By adjusting the heating temperature and the time during which the steel member is held, in particular the heating temperature, the thermal refining step can be performed such that root portion 31 B of wheel attachment flange 31 on the outboard side has a surface hardness not higher than 35 HRC and the inboard-side end portion of hub ring 30 has a surface hardness not higher than 25 HRC. In order to satisfy the condition for hardness of the inboard-side end portion of hub ring 30, after the tempering step for example, a local tempering step of locally tempering the inboard-side end portion of hub ring 30 by locally heating the same through induction heating using a high-frequency current may further be performed.

It is noted that cooling in the tempering step may be performed by letting the steel member stand in air at a room temperature (air cooling) or by pouring a coolant water over the steel member as necessary (shower cooling).

The thermal refining step is performed as described above, so that the steel forming the steel member comes to have a tempered martensite (tempered troostite and/or tempered sorbite) structure. Referring to Fig. 1, such a structure is retained in non-hardened portion 33 representing the region other than hardened portion 39 which is the region to be quench hardened in the subsequent induction hardening step. Therefore, a homogenous structure where substantially no ferrite or carbide is present (the ratio of area occupied by ferrite is not greater than 3% and the ratio of area occupied by carbide is not greater than 10%), preferably no ferrite or carbide is present, is obtained. Consequently, hub ring 30 (inner member) serving as the flanged member for wheel in the present embodiment excellent in fatigue strength of non-hardened portion 33 can be manufactured.

In the thermal refining step above, if the heating temperature in the quenching step is lower than 800°C, solid solution state of carbide before cooling in quenching is insufficient and ferrite or carbide may remain. Therefore, the heating temperature is preferably set to 800°C or higher. Meanwhile, if the heating temperature exceeds 900°C, the grain size of austenite before cooling in quenching becomes greater and the grain size number of austenite after quenching may be smaller than No. 8. Therefore, the heating temperature is preferably set to 900°C or lower.

In addition, by performing the thermal refining step as described above, hydrogen that may be introduced in the steel member from an atmospheric gas containing hydrogen atoms (such as a mixture gas of carbon monoxide, carbon dioxide and hydrogen) during heating in the quenching step is emitted to the outside as a result of heating of the steel member to a temperature not lower than 400°C in the tempering step, so that the content of non-diffusible hydrogen is reduced to 0.8ppm or lower. Consequently, hub ring 30 (inner member) serving as the flanged member for wheel in the present embodiment excellent in fatigue strength of non-hardened portion 33 can be manufactured.

Moreover, by performing the thermal refining step as described above, the heating temperature in the quenching step is set to 900°C or lower and the grain size number of generated austenite is held at No. 8 or higher. Consequently, hub ring 30 (inner member) serving as the flanged member for wheel in the present embodiment excellent in fatigue strength of non-hardened portion 33 can be manufactured.

Further, by performing the turning step and/or the broaching step after the thermal refining step, compressive stress not lower than 50MPa and not higher than 500MPa can remain in the surface of non-hardened portion 33. Consequently, hub ring 30 (inner member) serving as the flanged member for wheel in the present embodiment excellent in fatigue strength of non-hardened portion 33 can be manufactured.

As described above, according to the method of manufacturing the bearing apparatus for wheel in the present embodiment above, bearing apparatus for wheel 1 in the present embodiment can be manufactured.

In the embodiment above, an example adopting a tapered roller as a rolling element has been illustrated and described, however, the rolling element that can be adopted in the bearing apparatus for wheel according to the present invention is not limited thereto, and a cylindrical roller or a ball may be adopted as the rolling element. In addition, in the embodiment above, an example in which inner ring 40 is fixed to hub ring 30 by using caulking has been described, however, inner ring 40 may be fixed to hub ring 30 by means of a fixing member such as a bolt. Moreover, in the embodiment above, an example in which hub ring 30 is implemented as a hub ring for driven wheel that includes insertion hole 38 as a penetration hole penetrating hub ring 30 in the direction of axis has been described, however, the hub ring constituting the bearing apparatus for wheel according to the present invention is not limited thereto, and a hub ring for idler wheel without a penetration hole may be adopted.

As to a material for hub ring 30, in addition to steel containing carbon not less than 0.4 mass % and not more than 0.8 mass % such as S53C under JIS, SAE1070 and the like may be adopted. In addition, as to a material for inner ring 40, in addition to SUJ2 under JIS for example, SUJ3, SCr420, SCM420, and the like may be adopted. Moreover, as to a material for outer ring 10, in addition to S53C under JIS for example, SAE1070 and the like may be adopted. Further, as to a material for roller 50, in addition to SUJ2 under JIS for example, SUJ3, SCr420, SCM420, and the like may be adopted.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

The bearing apparatus for wheel according to the present invention can particularly advantageously be applied to a bearing apparatus for wheel in which high durability is required in order to rotatably support the wheel with respect to the body of an automobile or the like.

## Claims

1. A bearing apparatus for wheel (1), comprising:
an outer member (10) having multiple rows of annular outer raceway surfaces (10A) formed on an inner circumferential surface (11);
an inner member (20) having multiple rows of annular inner raceway surfaces (40A) opposing said outer raceway surfaces (10A) formed; and
a plurality of rolling elements (50) in contact with said outer raceway surfaces (10A) and said inner raceway surfaces (40A) and arranged on annular raceways in a freely rolling manner;
any one of said outer member (10) and said inner member (20) including a flanged member for wheel (30), that is made of steel and has a wheel attachment flange (31) formed, the wheel attachment flange (31) being a flange for attaching a wheel, said flanged member for wheel (30) having
a hardened portion (39) hardened to attain 50 HRC or higher as a result of quench hardening, and
a non-hardened portion (33) representing a portion other than said hardened portion (39), **characterized in that**
said steel forming said non-hardened portion (33) has a ratio of area occupied by ferrite of not higher than 3%, and said steel forming said non-hardened portion (33) has austenite grain size of No. 8 or higher,
wherein
said flanged member for wheel (30) has an insertion hole (38) for insertion of another member formed in a region including a central axis of said raceway of said rolling element (50), and the side wall of the insertion hole (38) is included in the non-hardened portion where compressive stress in a range from at least 50 MPa to at most 500 MPa remains in the surface.

2. The bearing apparatus for wheel (1) according to claim 1, wherein
a root portion (31 B) of said wheel attachment flange (31) on a side where said wheel is attached when viewed from said wheel attachment flange (31) has a surface hardness of 35 HRC or lower.

3. The bearing apparatus for wheel (1) according to claim 1, wherein
said inner member (20) includes
a hub ring (30) serving as said flanged member for wheel, and
an inner ring (40) fitted into said hub ring (30).

4. The bearing apparatus for wheel (1) according to claim 3, wherein
an inboard-side end portion representing an end portion of said hub ring (30) opposite to where said wheel is attached when viewed from said wheel attachment flange (31) forms a caulking portion (34A) as a result of plastic deformation in a radially outward direction, and
said inner ring (40) is fixed to said hub ring (30) in a direction of axis by said caulking portion (34A).

5. The bearing apparatus for wheel (1) according to claim 4, wherein
said caulking portion (34A) is formed as a result of plastic deformation of said inboard-side end portion having a surface hardness of 25 HRC or lower.

6. The bearing apparatus for wheel (1) according to claim 1, wherein
a root portion (31D) of said wheel attachment flange (31) opposite to where said wheel is attached when viewed from said wheel attachment flange (31) has a surface hardness not lower than 54 HRC and not higher than 64 HRC.

7. The bearing apparatus for wheel (1) according to claim 1, wherein
said steel is a medium-carbon steel containing carbon not less than 0.40 mass % and not more than 0.80 mass %.

## Patentansprüche

1. Lagervorrichtung für ein Rad (1), die Folgendes aufweist:
ein äußeres Element (10), das mehrere Reihen von ringförmigen äußeren Laufbahnoberflächen (10A) hat, die an einer inneren Umfangsoberfläche (11) gebildet sind;
ein inneres Element (20), das mehrere Reihen von ringförmigen inneren Laufbahnoberflächen (40A) hat, die den gebildeten äußeren Laufbahnoberflächen (10A) gegenüberliegen; und
eine Mehrzahl von Rollelementen (50) in Kontakt mit den äußeren Laufbahnoberflächen (10A) und den inneren Laufbahnoberflächen (40A) und in einer frei rollenden Art und Weise an ringförmigen Laufbahnoberflächen angeordnet;
wobei ein beliebiges des äußeren Elements (10) und des inneren Elements (20) ein angeflanschtes Element für ein Rad (30) aufweist, das aus Stahl gefertigt ist und einen gebildeten Rad-Befestigungsflansch (31) hat, wobei der Rad-Befestigungsflansch (31) ein Flansch zum Anbringen eines Rades ist
wobei das angeflanschte Element für ein Rad (30) Folgendes aufweist:
einen gehärteten Abschnitt (39), der gehärtet ist, so dass er 50 HRC oder mehr als ein Ergebnis eines Abschreck-Härtens erreicht, und
einen nicht-gehärteten Abschnitt (33), der einen anderen Abschnitt als den gehärteten Abschnitt (39) repräsentiert, **dadurch gekennzeichnet, dass**
der Stahl, der den nicht gehärteten Abschnitt (33) bildet, ein Flächenverhältnis, das durch Ferrit besetzt ist, von nicht mehr als 3% hat, und dass der Stahl, der den nicht gehärteten Abschnitt (33) bildet, eine Austenit-Korngröße von Nr. 8 oder höher hat, wobei
das angeflanschte Element für ein Rad (30) ein Einführloch (38) zum Einführen eines anderen Elements hat, das in einem Bereich, der eine Mittelachse der Laufbahn des Rollelements (50) aufweist, gebildet ist, und die Seitenwand des Einführlochs (38) in dem nicht gehärteten Abschnitt enthalten ist, in dem eine Druckspannung in einem Bereich von mindestens 50 MPa bis höchstens 500 MPa in der Oberfläche verbleibt.

2. Lagervorrichtung für ein Rad (1) nach Anspruch 1, wobei
ein Fußabschnitt (31B) des Rad-Befestigungsflanschs (31) an einer Seite, an der das Rad angebracht ist, wenn es von dem Rad-Befestigungsflansch angesehen (31) wird, eine Oberflächenhärte von 35 HRC oder weniger hat.

3. Lagervorrichtung für ein Rad (1) nach Anspruch 1, wobei das innere Element (20) Folgendes aufweist:
einen Nabenring (30), der als das angeflanschte Element für ein Rad dient, und
einen inneren Ring (40), der in den Nabenring (30) eingepasst bzw. eingebaut ist.

4. Lagervorrichtung für ein Rad (1) nach Anspruch 3, wobei
ein innenseitiger Endabschnitt, der einen Endabschnitt des Nabenrings (30) repräsentiert, gegenüber dazu, wo das Rad angebracht ist, wenn es von dem Rad-Befestigungsflansch angesehen (31) wird, einen Befestigungs- bzw. Dichtabschnitt (34A) als ein Ergebnis der plastischen Verformung in einer radial nach außen gerichteten Richtung bildet, und
wobei der innere Ring (40) in einer Richtung der Achse an dem Nabenring (30) durch den Befestigungs- bzw. Dichtabschnitt (34A) befestigt ist.

5. Lagervorrichtung für ein Rad (1) nach Anspruch 4, wobei
der Befestigungs- bzw. Dichtabschnitt (34A) als ein Ergebnis der plastischen Verformung des innenseitigen Endabschnitts, der eine Oberflächenhärte von 25 HRC oder weniger hat, gebildet ist.

6. Lagervorrichtung für ein Rad (1) nach Anspruch 1, wobei
ein Fußabschnitt (31 D) des Rad-Befestigungsflanschs (31) gegenüber dazu, wo das Rad angebracht ist, wenn es von dem Rad-Befestigungsflansch angesehen (31) wird, eine Oberflächenhärte von nicht weniger als 54 HRC und nicht höher als 64 HRC hat.

7. Lagervorrichtung für ein Rad (1) nach Anspruch 1, wobei
der Stahl ein Stahl mit mittlerem Kohlenstoffgehalt ist, der nicht weniger als 0,40 Masse-% und nicht mehr als 0,80 Masse-% Kohlesntoff enthält.

## Revendications

1. Système de palier destiné à une roue (1), comprenant :
un élément extérieur (10) comportant de multiples rangées de surfaces annulaires externes formant chemin de roulement (10A), formées sur une surface circonférentielle interne (11) ;
un élément intérieur (20) comportant de multiples rangées de surfaces annulaires internes formant chemin de roulement (40A) opposées auxdites surfaces de chemin de roulement externes (10A) formées ; et
un pluralité de roulements (50) en contact avec ladite surface formant chemin de roulement externe (10A) et avec ladite surface formant chemin de roulement interne (40A) et agencé sur un chemin de roulement annulaire d'une façon à roulement libre ;
l'un quelconque dudit élément extérieur (10) et dudit élément intérieur (20) comportant un élément à bride destiné à la roue (30), lequel est constitué d'acier et comporte une bride formée pour la fixation à la roue (31), la bride de fixation à la roue (31) étant une bride permettant de fixer une roue,
ledit élément à bride destiné à la roue (30) comportant
une partie durcie (39), durcie en vue d'atteindre 50 HRC, ou plus, du fait d'un durcissement par trempe, et
une partie (33) représentant une partie autre que ladite partie durcie (39), **caractérisé en ce que**
ledit acier formant ladite partie non durcie (33) présente un rapport de surface occupée par la ferrite qui n'est pas supérieur à 3%, et **en ce que** ledit acier formant ladite partie non durcie (33) présente une dimension de grain d'austénite de N° 8, ou plus,
dans lequel
ledit élément à bride destiné à une roue (30) comporte un trou d'insertion (38) permettant l'insertion d'un autre élément formé dans une zone incluant un axe central dudit chemin de roulement dudit élément de roulement (50), et la paroi latérale du trou d'insertion (38) est incluse dans la partie non durcie où une contrainte de compression se situant dans une plage allant de 50 MPa au moins jusqu'à 500 MPa au plus, reste dans la surface.

2. Système de palier destiné à une roue (1) selon la revendication 1, dans lequel
une partie de pied (31B) de ladite bride de fixation à la roue (31), d'un côté où ladite roue est fixée lorsqu'elle est vue à partir de ladite bride de fixation de roue (31), présente une dureté de surface de 35 HRC ou moins.

3. Système de palier destiné à une roue (1) selon la revendication 1, dans lequel ledit élément intérieur (20) comporte
un anneau de moyeu (30) utilisé en tant que dit élément à bride destiné à une roue, et
un anneau interne (40) ajusté dans ledit anneau de moyeu (30).

4. Système de palier destiné à une roue (1) selon la revendication 3, dans lequel
une partie d'extrémité du côté intérieur représentant une partie d'extrémité dudit anneau de moyeu (30) opposée à l'endroit où ladite roue est fixée, lorsqu'on l'observe à partir de ladite bride de fixation de roue (31), forme une partie de matage (34A) en conséquence d'une déformation plastique dans une direction tournée radialement vers l'extérieur, et
ledit anneau intérieur (40) est fixé audit anneau de moyeu (30) dans une direction de l'axe par ladite partie de matage (34A).

5. Système de palier destiné à une roue (1) selon la revendication 4, dans lequel ladite partie de matage (34A) est formée en conséquence de la déformation plastique de ladite partie d'extrémité du côté intérieur présentant une dureté de surface de 25 HRC ou moins.

6. Système de palier destiné à une roue (1) selon la revendication 1, dans lequel une partie de pied (31D) de ladite bride de fixation de roue (31) opposée à l'endroit où ladite roue est fixée, lorsqu'elle est vue à partir de ladite bride de fixation de roue (31), présente une dureté de surface qui n'est pas inférieure à 54 HRC et qui n'est pas supérieure à 64 HRC.

7. Système de palier destiné à une roue (1) selon la revendication 1, dans lequel ledit acier est un acier ordinaire contenant une quantité de carbone qui n'est pas inférieure à 0,40 % en masse et qui n'est pas supérieure à 0,80 % en masse.
